# EUROPÄISCHE PATENTANMELDUNG

(11) **EP 0 864 390 A2**
(43) Veröffentlichungstag der Anmeldung: **16.09.1998**
(21) Anmeldenummer: 97121823.5
(22) Anmeldetag: 11.12.1997
(51) Int. Cl.: B23B 31/12

(54) **Bohrfutter**

(30) Priorität: 14.03.1997 DE 19710565
(71) Anmelder: Röhm GmbH, 89567 Sontheim (DE)
(72) Erfinder: Röhm, Günter Horst, 89567 Sontheim (DE)
(74) Vertreter: Dziewior, Joachim, Dipl.-Phys. Dr.

(57) **Zusammenfassung**

Die Erfindung betrifft ein Bohrfutter mit einem an eine Bohrspindel anschließbaren Futterkörper (1) und mit Spannbacken (4), die durch einen Spannring (10) verstellbar sind. Eine Sperreinrichtung für den Spannring (10) besteht aus einem Kranz (15) von Sperrausnehmungen (16) und aus einem Sperrglied (17), das an einem Schleppring (19) angeordnet ist. Das Bohrfutter besitzt einen am Futterkörper (1) geführten Stellring (20), der durch Anschläge (23, 24) begrenzt relativ zum Schleppring (19) verdrehbar ist und durch dessen Verdrehen das Sperrglied (17) zwischen dem in die Sperrausnehmungen (16) eingerückten Zustand und dem ausgerückten Zustand verstellbar ist. Der Stellring ist aus einer Mittenstellung mit in die Sperrausnehmungen (16) eingreifendem Sperrglied (17) in beide Drehrichtungen (S, L) relativ zum Schleppring (19) zum Verstellen des Sperrgliedes (17) in den ausgerückten Zustand verdrehbar.

## Beschreibung

Die Erfindung betrifft ein Bohrfutter mit einem an eine Bohrspindel anschließbaren Futterkörper, mit zwischen sich eine Aufnahme für das Bohrwerkzeug bildenden Spannbacken, die zum öffnen und Schließen des Bohrfutters durch einen am Futterkörper drehbar geführten Spannring verstellbar sind, mit einer Sperreinrichtung für den Spannring, bestehend aus einem Kranz von Sperrausnehmungen und aus einem Sperrglied, das an einem am Futterkörper drehbar geführten koaxialen Schleppring angeordnet ist, sowie mit einem am Futterkörper drehbar geführten koaxialen Stellring, der durch Anschläge begrenzt relativ zum Schleppring verdrehbar ist und durch dessen Verdrehen das Sperrglied zwischen dem in die Sperrausnehmungen eingerückten Zustand und dem ausgerückten Zustand verstellbar ist.

Aus der DE 43 13 742 C1 ist ein derartiges Bohrfutter bekannt, das in handspannender Ausführung vorliegt, mit Spannbacken, die mit einer Außenverzahnung in die Innenverzahnung eines mit dem Spannring drehfest verbundenen Gewinderinges greifen, der zum Spannen und Lösen des Futters von Hand bei festgehaltenem Stellring verdreht werden kann. Um unerwünschte Verstellungen der Spannbacken zu verhindern, weist der Spannring einen koaxialen Kranz von Sperrausnehmungen an der inneren Umfangsfläche auf, in die unter der Kraft einer Sperrfeder ein radial von innen nach außen verstellbares Sperrglied eingreift. Dabei liegen das Sperrglied und die es aufnehmenden Sperrausnehmungen einander in derart geneigten Flankenflächen an, daß diese den Spannring in der dem Öffnen des Bohrfutters entsprechenden Drehrichtung gegen Verdrehen verriegeln, in der dem Schließen des Bohrfutters entsprechenden Drehrichtung aber das Sperrglied gegen die Kraft der Sperrfeder aus den Sperrausnehmungen herausdrücken, so daß das Sperrglied von Sperrausnehmung zu Sperrausnehmung entlang dem Umfang des Spannringes verrutscht. Dieses Springen des Sperrgliedes von Sperrausnehmung zu Sperrausnehmung macht sich beim Spannen des Bohrfutters durch ein ratterndes Geräusch störend bemerkbar, wobei mit dem Rutschen über die Sperrausnehmungen auch ein erhöhter Verschleiß verbunden ist.

Der Erfindung liegt daher die Aufgabe zugrunde, ein Bohrfutter der eingangs genannten Art so auszubilden, daß die Sperreinrichtung beim Bohrbetrieb das Bohrfutter sicher verriegelt, beim Spannen oder Lösen des Bohrfutters sich aber nicht störend bemerkbar macht.

Diese Aufgabe wird bei einem Bohrfutter der eingangs genannten Art dadurch gelöst, daß der Stellring aus einer Mittenstellung mit in die Sperrausnehmungen eingreifendem Sperrglied in beide Drehrichtungen relativ zum Schleppring zum Verstellen des Sperrgliedes in den ausgerückten Zustand verdrehbar ist, und daß zwischen dem Stellring und dem Schleppring eine den Stellring nach dessen Verdrehen in Spannrichtung in die Mittenstellung zurückstellende Sperrfeder angeordnet ist.

Dieses Bohrfutter bietet den Vorteil, daß in jedem Betriebszustand eine auf diesen abgestimmte Stellung der Sperreinrichtung existiert. Beim Spannen oder Lösen des Bohrfutters kann unabhängig von der Drehrichtung des Spannringes das Sperrglied aus der Sperrausnehmung heraustreten, so daß die Verdrehbarkeit des Spannringes ohne Springen des Sperrgliedes über die Sperrausnehmungen gegeben ist. Die Funktionssicherheit des Bohrfutters beim Bohrbetrieb ist durch die Sperrfeder gewährleistet, die beim Spannen des Bohrfutters gespannt wird und dadurch nach dem Spannen und Freigabe des Stellrings sicherstellt, daß der Stellring beim Bohrbetrieb die Mittenstellung einnimmt, in der das Sperrglied in die Sperrausnehmung am Spannring eingreift.

Im Rahmen der Erfindung ist vorgesehen, daß der Schleppring eine Aussparung aufweist, die sich längs eines mit der Futterachse konzentrischen Kreisbogens erstreckt, daß in der Aussparung die Sperrfeder angeordnet ist, und daß der Stellring mit einem Zapfen in die Aussparung eingreift. Diese Gestaltung ermöglicht eine in axialer Richtung kompakte Bauweise des Bohrfutters, wobei der in die Aussparung eingreifende Zapfen nicht nur zur Beaufschlagung der Sperrfeder dient, sondern zugleich durch einen Anschlag am Ende der Aussparung die Begrenzung für die Drehung zwischen Stellring und Schleppring bildet.

Ein im Rahmen der Erfindung bevorzugte Ausführungsform ist dadurch gekennzeichnet, daß zwischen dem Stellring und dem Schleppring eine Rasteinrichtung mit drei Betriebsstellungen ausgebildet ist, wobei das Sperrglied sich in einer der Betriebsstellungen im eingerückten Zustand und in den anderen Betriebsstellungen im ausgerückten Zustand befindet. Die Rasteinrichtung dient dazu, eine drehfeste Verbindung zwischen dem Schleppring und dem Stellring für den Fall zu gewährleisten, daß das Bohrfutter gelöst wird und dazu der Spannring frei gegenüber dem Stellring verdreht werden muß, die Sperreinrichtung also dauerhaft im ausgerückten Zustand sich befinden muß. Weiterhin stellt die Rasteinrichtung auch eine drehsichere Verbindung zwischen Stellring und Schleppring im Bohrbetrieb sicher, wobei die Sperrfeder in der der Spannrichtung entsprechenden Drehrichtung die Wirkung der Rasteinrichtung unterstützt und einem Verdrehen des Stellrings in der Spannrichtung der Feder mit ihrer Federkraft entgegenwirkt. Die dritte Betriebsstellung der Rasteinrichtung mit gespannter Sperrfeder gewährleistet die Möglichkeit, das Sperrglied aus den Sperrausnehmungen zum Spannen auszurücken.

Zweckmäßigerweise weist der Schleppring eine sektorförmige Ausnehmung auf, deren Enden Anschläge für einen am Stellring ausgebildeten Rastnocken der Rasteinrichtung bilden, und die den maximalen Verstellweg zwischen Schleppring und Stellring begrenzen. Die Anschläge begrenzen die Verdrehbarkeit zwischen Schleppring und Stellring und unterstützen insoweit den in die Aussparung des Schleppringes ragenden Zapfen des Stellrings.

Dabei hat sich als günstig gezeigt, wenn der Rastnocken eine an einer radial federnden Rastlippe ausgebildete Rastnase aufweist, die aus einer an einer Rastschulter des Schlepprings anliegenden Ruhelage mit eingerücktem Sperrglied in einen Rastsitz mit ausgerücktem Sperrglied verstellbar ist. Die Rastlippe ist aus der Wand des sie tragenden Stellringes freigeschnitten und stellt die für den sicheren Betrieb der Rasteinrichtung notwendige Federkraft zur Verfügung. Unter der Kraft der Sperrfeder wird die Rastnase an der Rastschulter gehalten. Erst wenn eine zusätzlichen Kraft in Löserichtung auftritt, federt die Rastlippe mit der Rastnase nach innen, wenn die Rastnase entlang der als Steuerkurve wirkenden Rastschulter nach innen gedrückt wird, um in den Rastsitz überzugehen, der zu einer Drehstellung des Stellrings gehört, in der das Sperrglied aus den Sperrausnehmungen ausgerückt ist.

Die Erfindung findet sowohl bei handspannenden Bohrfuttern als auch bei selbstspannenden Bohrfuttern Anwendung, bei denen die Spannbacken in einem am Futterkörper ausgebildeten Gewinde angeordnet sind und verstellt werden, indem der Futterkörper durch die Bohrspindel der Bohrmaschine in Vorwärtsrichtung oder Rückwärtsrichtung angetrieben wird. Da durch die angetriebene Bohrspindel ein permanentes Drehmoment wirkt und zum Betätigen des Bohrfutters nicht mehrmals umgegriffen werden muß, muß keine drehfeste Verbindung zwischen Schleppring und Stellring herstellt werden, so daß auf eine Rasteinrichtung verzichtet werden kann, solange im Bohrbetrieb gewährleistet ist, daß das Sperrglied in die Sperrausnehmungen eingerückt ist, also der Stellring in der ausgewählten Drehlage der Mittenstellung relativ zum Schleppring vorliegt. Daher ist vorgesehen, daß zwischen dem Stellring und dem Schleppring eine den Stellring nach dessen Verdrehen in Löserichtung in die Mittenstellung zurückstellende Rastfeder angeordnet ist. Diese Rastfeder hat in Löserichtung die korrespondierende Funktion, die der Sperrfeder beim Verdrehen des Stellringes in Spannrichtung zukommt, so daß unabhängig vom Drehsinn der Verstellung des Stellrings relativ zum Schleppring eine Feder gespannt wird, die die Zurückstellung des Stellringes in die Mittenstellung mit eingerücktem Sperrgliedes bewirkt.

Dabei ist es günstig, wenn der Stellring zwei radial nach innen weisende Haken aufweist, die in Ausnehmungen des Schleppringes eingreifen, in denen die Rastfeder bzw. die Sperrfeder angeordnet sind, die durch die Haken betätigbar sind, die jeweils Anschläge für den Schleppring aufweisen.

Eine im Rahmen der Erfindung weiterhin bevorzugte Ausführungsform ist dadurch gekennzeichnet, daß das Sperrglied durch eine es in den ausgerückten Zustand verstellende Feder beaufschlagt ist. Wenn das Sperrglied aufgrund der relativen Lage von Schleppring und Stellring zueinander die Möglichkeit hat, in den ausgerückten Zustand überzugehen, bedarf es aufgrund der Feder auch anfänglich nicht einer besonders ausgebildeten Flankenneigung der Sperrausnehmungen, um das Sperrglied in den ausgerückten Zustand zu verstellen, wobei aufgrund der Feder es weiterhin zuverlässig im ausgerückten Zustand gehalten wird, so daß eine weitere Sicherung gegen das als unschön empfundene Rattern des Sperrgliedes besteht.

Zweckmäßigerweise ist das Sperrglied durch eine Sperrklinke gebildet, wobei weiterhin der Kranz von Sperrausnehmungen an der axial der Bohrspindel zugewandten Seite des Spannrings angeordnet ist, so daß der Schleppring axial benachbart zum Spannring und Stellring angeordnet sein kann, was aus fertigungstechnischen Gründen wünschenswert ist.

Nach der Erfindung sind zwei der Sperrglieder vorgesehen, wodurch sich insgesamt eine geringere lokale Belastung der Sperreinrichtung ergibt.

Im folgenden soll die Erfindung an in der Zeichnung dargestellten Ausführungsbeispielen näher erläutert werden; es zeigen:
- Fig. 1: ein Bohrfutter in einer handspannenden Ausführungsform in einem Axialschnitt, teils in Seitenansicht,
- Fig. 2: den Schnitt II - II aus Fig. 1 in drei verschiedenen Betriebszuständen a, b, c des Bohrfutters,
- Fig. 3: den Schnitt III - III aus Fig. 2 in den drei verschiedenen Betriebszuständen, a, b, c jeweils ohne und mit durch eine Feder beaufschlagtem Sperrglied,
- Fig. 4: den Schnitt IV - IV aus Fig. 1 in den drei verschiedenen Betriebszuständen a, b, c des Bohrfutters,
- Fig. 5: den Schnitt V - V aus Fig. 1 in den drei verschiedenen Betriebszuständen a, b, c des Bohrfutters,
- Fig. 6: ein Bohrfutter in selbstspannender Ausführungsform in einem Axialschnitt, teils in Seitenansicht,

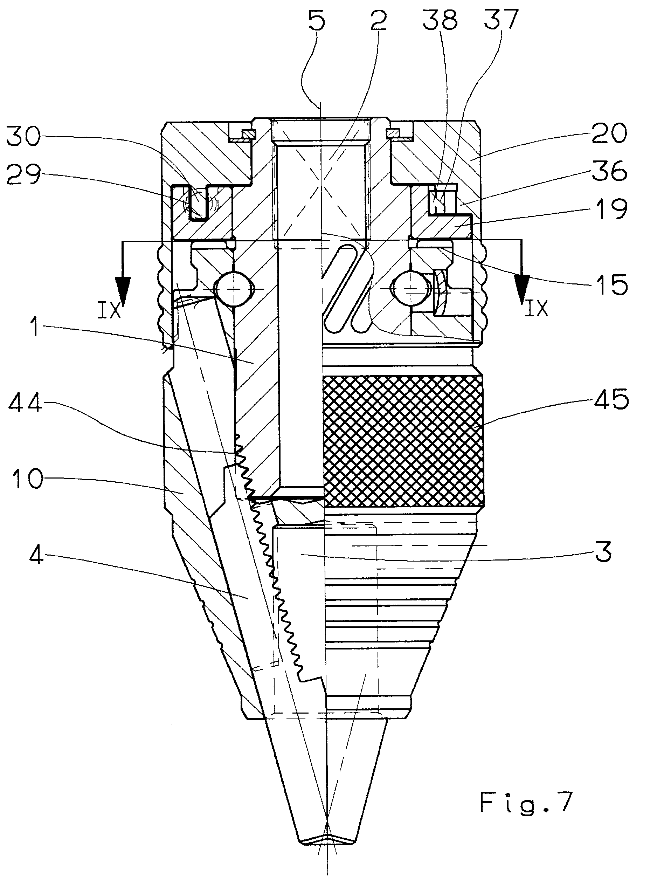

- Fig. 7: einen zu dem Schnitt aus Fig. 6 um 90° versetzten Axialschnitt durch ein selbstspannendes Bohrfutter, teils in Seitenansicht,
- Fig. 8: eine der Fig. 2 und 3 entsprechende Darstellung bei einem selbstspannenden Bohrfutter,
- Fig. 9: den Schnitt IX - IX aus Fig. 7,
- Fig. 10: ein Axialschnitt durch ein Bohrfutter nach einer weiteren Ausführungsform, teils in Seitenansicht, und
- Fig. 11: den Schnitt XI - XI aus Fig. 10.

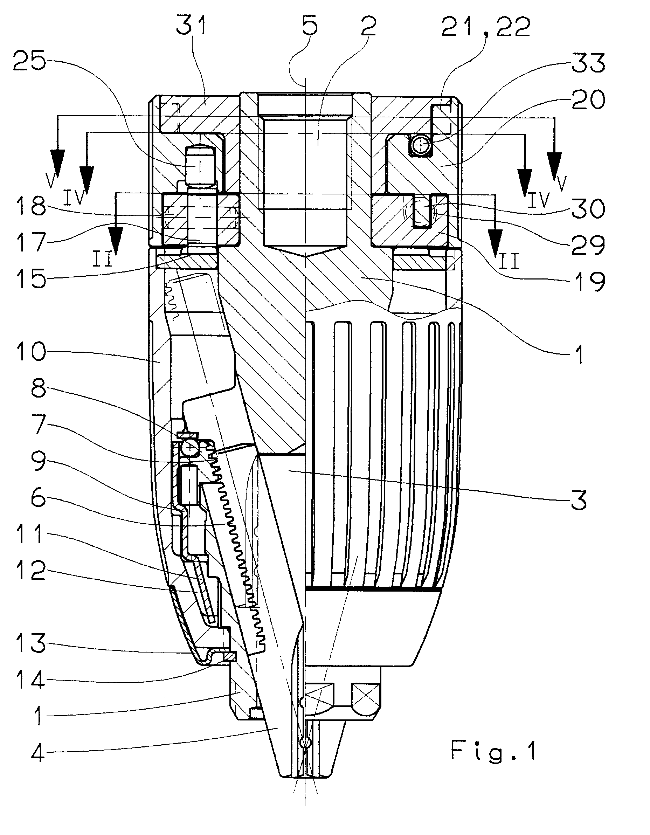

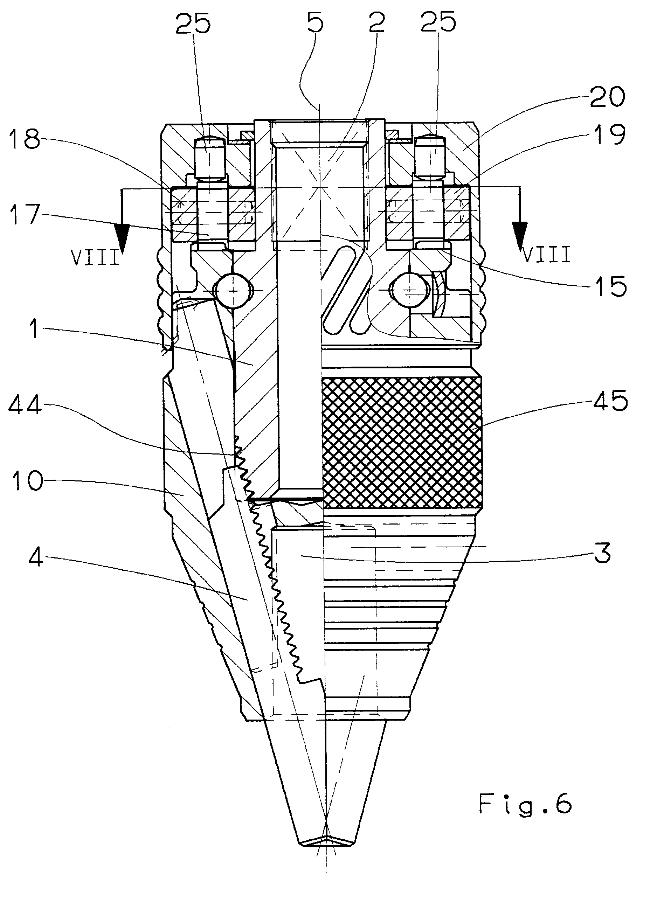

In Fig. 1 ist ein Bohrfutter in handspannender Ausführungsform, in Fig. 6 ein Bohrfutter in selbstspannender Ausführungsform gezeigt, wobei der Gegenstand der Erfindung bei beiden Bohrfuttertypen eingesetzt werden kann. Die in der Zeichnung dargestellten Bohrfutter besitzen einen Futterkörper 1, der am axial rückwärtigen Ende eine Gewindeaufnahme 2 für eine in der Zeichnung selber nicht dargestellte Bohrspindel aufweist. An die Gewindeaufnahme 2 kann sich axial nach vorne ein axialer Durchgang anschließen, durch den hindurch die Schläge eines in der hohlen Bohrspindel verschiebbar geführten Schlägers oder Döppers unmittelbar auf das Schaftende des in der Werkzeugaufnahme 3 des Bohrfutters gehaltenen Bohrers übertragen werden können, der gleichfalls in der Zeichnung selber nicht dargestellt ist. Die Bohrfutter besitzen den Bohrer zentrierende, axial führende und/oder einspannende Spannbacken 4, die in der zur Futterachse 5 koaxialen Werkzeugaufnahme 4 zentrisch zur Futterachse 5 verstellbar sind.

In der in Fig. 1 gezeigten Ausführungsform besitzen die Spannbacken 4 ein Außengewinde 6, mit dem diese in das Innengewinde 7 eines Gewinderings 8 eingreifen, der drehbar und axial unverschiebbar am Futterkörper 1 gelagert ist. Der Gewindering 8 ist drehfest mit einem Zwischenring 9 verbunden, der wiederum drehfest mit einem Spannring 10 verbunden ist. Es ist nach einer nicht in der Zeichnung dargestellten Ausführungsform aber auch möglich, mittels einer Steckverbindung unmittelbar zwischen Gewindering 8 und Spannring 10 eine drehfeste Verbindung herzustellen. Die drehfeste Verbindung zwischen Zwischenring 9 und Spannring 10 wird durch eine Steckverbindung realisiert, bei der vom axial vorderen Ende des Zwischenringes 9 Zungen 11 abstehen, die in Durchbrüche 12 des Spannringes 10 eingreifen. Der Spannring 10 ist durch eine Anschlaghülse 13 axial nach vorne am Futterkörper 1 abgestützt, wobei die Anschlaghülse 13 durch einen Sprengring 14 am axial vorderen Ende des Futterkörpers 1 gesichert ist.

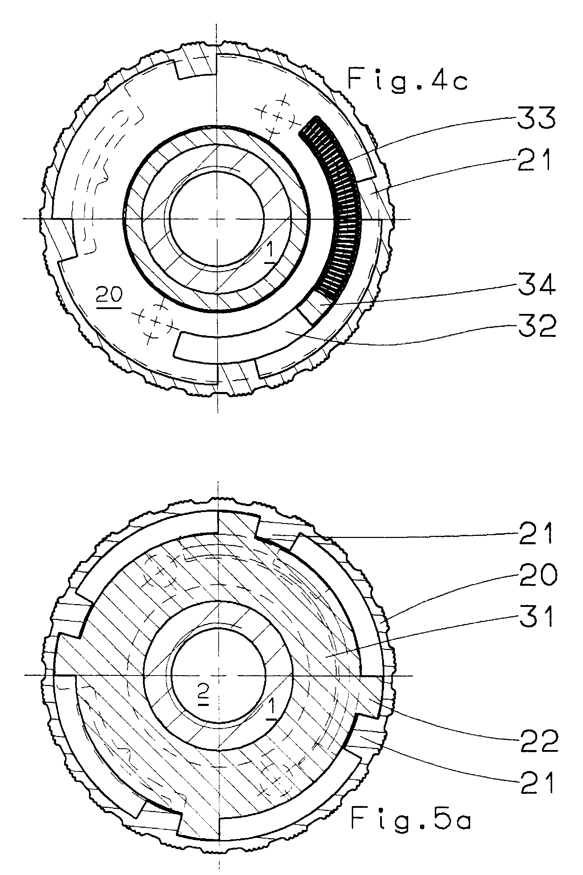

An der axial der Bohrspindel zugewandten Seite weist der Spannring 10 einen Kranz 15 von Sperrausnehmungen 16 auf, der besonders deutlich aus der Fig. 9 zu erkennen ist. Dieser Kranz 15 von Sperrausnehmungen 16 ist Teil einer Sperreinrichtung, die dazu dient, eine drehfeste Verbindung zwischen Spannring 10 und Futterkörper 1 herzustellen, um ein unbeabsichtigtes Verdrehen des Spannringes 10 und damit ein Öffnen oder Schließen des Bohrfutters zu vermeiden. Die Sperreinrichtung umfaßt weiterhin zwei sich diametral gegenüber liegende Sperrglieder 17, die als Sperrklinken ausgebildet und auf Lagerzapfen 18 in einem Schleppring 19 gelagert sind, der koaxial zum Futterkörper 1 an diesem drehbar geführt ist. Axial benachbart zum Schleppring 19, zum bohrspindelseitigen Ende des Futterkörpers 1 versetzt ist ein zum Futterkörper 1 koaxialer Stellring 20 angeordnet, der relativ zum Futterkörper 1 und zum Schleppring 19 verdrehbar ist, wobei Anschlagstücke 21, 22 vorhanden sind, die die Verdrehbarkeit gegenüber dem Futterkörper 1 begrenzen und Anschläge 23, 24, die die Drehbarkeit gegenüber dem Schleppring 19 begrenzen. Im Stellring 20 sind zwei Stifte 25 gehalten, die jeweils einem Sperrglied 17 aus dem Schleppring 19 zugeordnet sind, und die bei einer Verdrehung des Stellringes 20 relativ zum Schleppring 10 an Steuerkurven 26 des Sperrgliedes 17 entlanggleiten und das Sperrglied 17 in den eingerückten Zustand im Eingriff mit den Sperrausnehmungen 16 des Spannringes 10 verstellen, wobei sich dann der Stellring 20 in einer Mittenstellung befindet, aus der er in beide Drehrichtungen L oder S verdreht werden kann, um das Sperrglied 17 aus den Sperrausnehmungen 16 heraustreten zu lassen. In der in der Fig. 3' gezeigten Ausführungsform ist eine Feder 27 im Schleppring 19 gelagert, die am Sperrglied 17 angreift und dessen Verstellung in den ausgerückten Zustand unterstützt.

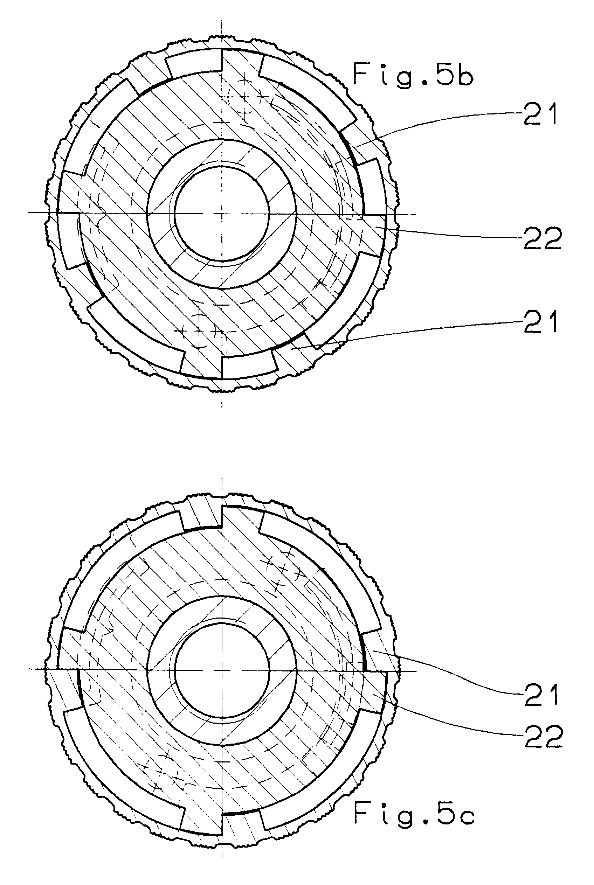

Der Schleppring 19 weist eine Aussparung 28 auf, die sich längs eines mit der Futterachse 5 konzentrischen Kreisbogens erstreckt. In dieser Aussparung 28 ist eine Sperrfeder 29 angeordnet, die durch einen in die Aussparung 28 ragenden Zapfen 30 des Stellrings 20 gespannt wird, wenn der Stellring 20 bzw. derSpannring 10 in Spannrichtung S verdreht wird. Das in Fig. 1 gezeigte handspannende Bohrfutter weist weiterhin am axial rückwärtigen Ende des Futterkörpers 1 einen drehfest mit diesem verbundenen Ringbund 31 auf. Der Stellring 20 besitzt eine sich längs eines zur Futterachse 5 konzentrischen Kreisbogens erstreckende Aussparung 32, in der die Nachstellfeder 33 angeordnet ist, die sich mit einem Ende am Stellring 20 abstützt und mit dem anderen Ende an einem Zapfen 34 des Ringbundes 31, der in die Aussparung 32 hineinragt. Die Nachstellfeder 33 wird beim Spannen des Bohrfutters gespannt und ermöglicht eine Nachstellung des Bohrfutters, falls sich beim Bohrbetrieb die Spannbacken 4 in das Bohrwerkzeug eingraben, womit eine Lockerung der Einspannung verbunden ist. An dem drehfest mit dem Futterkörper 1 verbundenen Ringbund 31 sind die radial abstehende Anschlagstücke 22 ausgebildet, die mit den Anschlagstücken 21 am Stellring 20 zusammenwirken und somit die Verdrehung des Stellringes 20 gegenüber dem Futterkörper 1 und damit die Nachstellung begrenzen (Fig. 5).

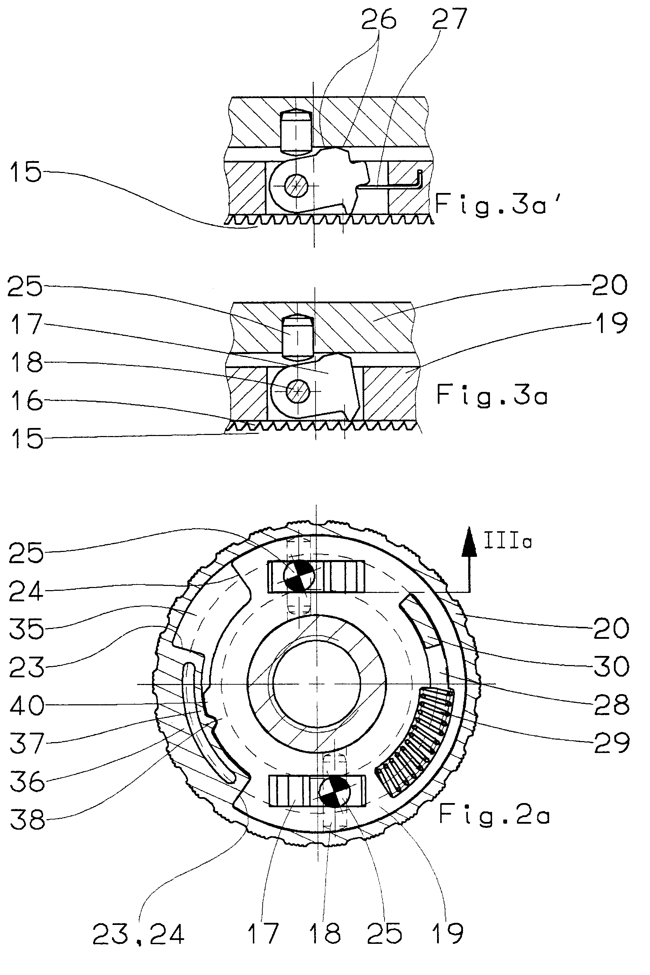

Zwischen dem Stellring 20 und dem Schleppring 19 ist eine Rasteinrichtung ausgebildet. Die Rasteinrichtung weist eine sektorförmige Ausnehmung 35 im Schleppring 19 auf, in die ein am Stellring 20 ausgebildeter Rastnocken 36 hineinragt, dessen Enden zusammen mit den Enden der sektorförmigen Ausnehmung die Anschläge 23, 24 bilden, die die Verdrehbarkeit zwischen Schleppring 19 und Stellring 20 begrenzen. Der Rastnocken 36 besitzt eine radial federnde Rastlippe 37, an der eine Rastnase 38 ausgebildet ist. Die Rasteinrichtung kann insgesamt drei Betriebsstellungen einnehmen, wobei in der einen Betriebsstellung die Rastnase 38 in einen am Stellring 20 ausgebildeten Rastsitz 39 eingreift und die Anschläge 23, 24 einander anliegen, bei denen der Stellring 20 in Öffnungsrichtung L den maximal möglichen Weg gegenüber dem Schleppring 19 verdreht ist (Fig. 2a). In Fig. 2b ist die Betriebsstellung gezeigt, bei der die Rastnase 38 an der Flanke der am Schleppring 19 ausgebildeten, zum Rastsitz 39 benachbarten Rastschulter 40 anliegt. In dieser Stellung befindet sich der Stellring 20 in der Mittenstellung, in der der Stift 25 das Sperrglied 17 in die Sperrausnehmungen 16 des Spannringes 10 drückt. Da die Nachstelleinrichtung den Stellring 20 in Richtung des Pfeiles S, der Schließrichtung des Bohrfutters, verdreht, wird aus Fig. 2b deutlich, daß die Federcharakteristik der Rastlippe 37 der Rasteinrichtung nicht unabhängig von der Federstärke der Nachstellfeder 33 gewählt werden kann, da vermieden werden muß, daß durch die Nachstellfeder 33 die Rastnase 38 über die Rastschulter 40 in den Rastsitz 39 verstellt wird, wodurch dann das Sperrglied 17 aus den Sperrausnehmungen 16 austreten und das Bohrfutter sich öffnen könnte. Kann aufgrund der Wirkung der Nachstellfeder 33 die Rastnase 39 nicht in den Rastsitz 39 verstellt werden, ist das Sperrglied 17 im Eingriff mit den Sperrausnehmungen 16, so daß sich mit dem Stellring 20 auch der Schleppring 19 und aufgrund des eingerückten Sperrgliedes 17 ebenfalls der Spannring 10 in Richtung des Pfeiles S zum Nachstellen verstellt.

Die dritte Betriebsstellung der Rasteinrichtung ist in Fig. 2c gezeigt, bei der die dem maximalen Verstellweg in Spannrichtung S zwischen Schleppring 19 und Stellring 20 entsprechenden Anschläge 23, 24 zusammenwirken und der in die Aussparung 28 des Schleppringes 19 ragende Zapfen 30 des Stellringes 20 die Sperrfeder 29 spannt, die bewirkt, daß nach dem Loslassen des Bohrfutters am Ende des Spannvorganges der Stellring 10 in die Mittenstellung zurückgedreht wird.

Statt der Rasteinrichtung zwischen Schleppring 19 und Stellring 20 kann entsprechend der in Fig. 11 gezeigten Ausführungsform auch eine analog zu der Sperrfeder fungierende Rastfeder 41 zwischen dem Stellring 20 und dem Schleppring 19 angeordnet sein, die gespannt wird, wenn der Stellring 20 in Löserichtung L verdreht wird. In dieser Ausführungsform sind am Stellring 20 zwei radial nach innen weisende Haken 42, 43 ausgebildet, die in Ausnehmungen des Schleppringes 19 eingreifen. In den Ausnehmungen sind die Rastfeder 41 bzw. die Sperrfeder 29 angeordnet, die je nach Drehrichtung von dem einen oder dem anderen Haken 42, 43 gespannt werden. An den Haken 42, 43 sind auch die Anschläge 23 ausgebildet, die den Drehweg zwischen Schleppring 19 und Stellring 20 begrenzen. Diese Ausführungsform läßt sich besonders sinnvoll bei selbstspannenden Bohrfuttern verwirklichen, bei denen nicht zum Öffnen oder Spannen des Bohrfutters mehrmals am Spannring 10 umgegriffen werden muß, sondern über die Bohrspindel ein permanentes Drehmoment auf den Futterkörper 1 übertragen wird, der wie bei diesem Bohrfuttertyp üblich am axial vorderen Ende ein konisches Spanngewinde 44 aufweist, in das die Spannbacken 4 mit ihrem Gewinde eingreifen, die geneigt zur Futterachse 5 in Bohrungen des Spannringes 10 verschiebbar geführt sind (Fig. 6).

Im folgenden soll die Funktionsweise des handspannenden Bohrfutters aus Fig. 1 geschildert werden. Zum Schließen des Bohrfutters und Einspannen eines Bohrwerkzeuges zwischen den Spannbacken 4 wird das Bohrfutter mit der einen Hand am Stellring 20 ergriffen, während die andere Hand am Spannring 10 angreift. Zum Spannen des Bohrfutters wird der Spannring 10 in Richtung des Pfeiles S verdreht, wobei sich über das in die Sperrausnehmungen 16 eingreifende Sperrglied 17 sich der Schleppring 19 mit verstellt, bis er mit dem Anschlag 24 der sektorförmigen Ausnehmung 35 am Anschlag 23 des Rastnockens 36 vom Stellring 20 anschlägt. Durch diese Relativdrehung zwischen Schleppring 19 und Stellring 20 liegt der Stift 25 nicht mehr an dem Sperrglied 17 an, das unter der Wirkung der Feder 27 aus den Sperrausnehmungen 16 austritt, wodurch die drehfeste Verbindung zwischen Schleppring 19 und Spannring 10 aufgehoben ist, so daß der Spannring 10 relativ zum Stellring 20 verdreht werden kann, bis die Spannbacken 4 dem Bohrwerkzeug anliegen und infolge der Verspannung des Bohrfutters beim fortwährenden Drehen des Spannringes 10 über die Spannbacken 4 der Futterkörper 1 unter Spannung der Nachstellfeder 33 mitgenommen wird, bis des vom Ringbund 31 abstehende Anschlagstück 22 am Anschlagstück 21 des Stellringes 20 anliegt, wie dies in Fig. 5c gezeigt ist. In dieser Stellung ist das Bohrwerkzeug eingespannt und die Nachstellfeder 33 maximal gespannt. Gespannt ist ebenfalls die Sperrfeder 29 gemäß Fig. 2c. Wird nun der Spannring 10 bei weiterhin festgehaltenem Stellring 20 losgelassen, um den Bohrbetrieb aufzunehmen, drückt die Sperrfeder 29 sich von dem in die Aussparung 28 des Schleppringes 20 ragenden Zapfen 30 des Stellringes 20 ab und verdreht den Schleppring 19 geringfügig in Öffnungsrichtung L, bis die Sperrfeder 29 entspannt ist und die Rastnase 38 der Rasteinrichtung an der Rastschulter 40 anliegt, wodurch der Stellring 20 die Mittenstellung in Bezug auf den Schleppring 19 einnimmt, in der der Stift 25 das Sperrglied 17 in die Sperrausnehmung 16 hereindrückt.

Bei diesem Übergang des Stellrings 20 in die Mittenstellung entspannt sich leicht die Nachstellfeder 33, wobei das Bohrfutter die in den Fig. 2b, 3b, 4b und 5b gezeigte Konfiguration einnimmt.

Graben sich beim Bohrbetrieb die Spannbacken 4 in das Bohrwerkzeug ein, wodurch sich die Einspannung lockert, so bewirkt die am Zapfen 34 des Ringbundes 31 abgestützte Nachstellfeder 33 eine in Schließrichtung, in Richtung des Pfeiles S stattfindende Verdrehung des Stellringes 20, der über die Rasteinrichtung mit der an der Rastschulter 40 anliegenden Rastnase 38 den Schleppring 19 mitnimmt, der wiederum aufgrund des in die Sperrausnehmungen 16 eingerückten Sperrgliedes 17 die in Schließrichtung S stattfindende Drehung des Spannringes 10 vermittelt. Die Nachstellung findet ein Ende, wenn das Anschlagstück 22 des Ringbundes 31 gegen das Anschlagstück 21 des Stellringes 20 läuft.

Das Öffnen bzw. Lösen des Bohrfutters erfolgt, in dem bei festgehaltenem Stellring 20 der Spannring 10 in Richtung des Pfeiles L verdreht wird, wobei zunächst der Schleppring 19 infolge des in die Sperrausnehmungen 16 eingreifenden Sperrgliedes 17 mitgenommen wird bis die Rastnase 38 in den Rastsitz 39 eintritt und der Anschlag 23 des Rastnockens 36 an dem Anschlag 24 der sektorförmigen Ausnehmung 35 anliegt. Dieser Zustand ist in Fig. 2a gezeigt. Das Sperrglied 17 ist nicht im Eingriff mit den Sperrausnehmungen 16 und der Spannring 10 kann in Löserichtung L verdreht werden, wobei über die noch vorliegende Verspannung des Bohrfutters über die Spannbacken 4 der Futterkörper 1 mitgenommen wird, bis das Anschlagstück 22 des Ringbundes 31 an dem Anschlagstück 21 des Stellrings anliegt und bei weiterfolgender Verdrehung des Spannringes 10 die Spannbacken 4 verstellt werden.

Die Betätigung des selbstspannenden Bohrfutters aus Fig. 6 erfolgt entsprechend in sinngemäßer Weise, in dem der Spannring 10 an der Rändelfläche 45 ergriffen und der Futterkörper 1 über die Bohrspindel in Vorwärtsrichtung oder Rückwärtsrichtung angetrieben wird. Die Relativdrehung des Spannringes 10 gegenüber dem Futterkörper 1 wird wiederum durch die Pfeile S und L angezeigt. Zu beachten ist bei diesem selbstspannenden Bohrfutter, daß am Schleppring 19 zwei achsparallele und zueinander schräge Planflächen 46 ausgebildet sind. Je nach Drehlage des Schleppringes 19 kommt die eine oder die andere Planfläche 46 an der zugeordneten Planfläche 47 des Futterkörpers 1 zur Anlage, so daß der Winkel zwischen den beiden Planflächen 46 des Schleppringes 19 den maximal möglichen Verdrehungsweg zwischen Schleppring 19 und dem Futterkörper 1 bestimmt, wodurch die Nachspannung begrenzt ist.

## Patentansprüche

1. Bohrfutter mit einem an eine Bohrspindel anschließbaren Futterkörper (1), mit zwischen sich eine Aufnahme (3) für das Bohrwerkzeug bildenden Spannbacken (4), die zum Öffnen und Schließen des Bohrfutters durch einen am Futterkörper (1) drehbar geführten Spannring (10) verstellbar sind, mit einer Sperreinrichtung für den Spannring (10), bestehend aus einem Kranz (15) von Sperrausnehmungen (16) und aus einem Sperrglied (17), das an einem am Futterkörper (1) drehbar geführten koaxialen Schleppring (19) angeordnet ist, sowie mit einem am Futterkörper (1) drehbar geführten koaxialen Stellring (20), der durch Anschläge (23, 24) begrenzt relativ zum Schleppring (19) verdrehbar ist und durch dessen Verdrehen das Sperrglied (17) zwischen dem in die Sperrausnehmungen (16) eingerückten Zustand und dem ausgerückten Zustand verstellbar ist, dadurch gekennzeichnet, daß der Stellring (20) aus einer Mittenstellung mit in die Sperrausnehmungen (16) eingreifendem Sperrglied (17) in beide Drehrichtungen (S, L) relativ zum Schleppring (19) zum Verstellen des Sperrgliedes (17) in den ausgerückten Zustand verdrehbar ist, und daß zwischen dem Stellring (20) und dem Schleppring (19) eine den Stellring (20) nach dessen Verdrehen in Spannrichtung in die Mittenstellung zurückstellende Sperrfeder (29) angeordnet ist.

2. Bohrfutter nach Anspruch 1, dadurch gekennzeichnet, daß der Schleppring (19) eine Aussparung (28) aufweist, die sich längs eines mit der Futterachse (5) konzentrischen Kreisbogens erstreckt, daß in der Aussparung (28) die Sperrfeder (29) angeordnet ist, und daß der Stellring (20) mit einem Zapfen (.0) in die Aussparung (28) eingreift.

3. Bohrfutter nach Anspruch 1 oder 2, dadurch gekennzeichnet, daß zwischen dem Stellring (20) und dem Schleppring (19) eine Rasteinrichtung mit drei Betriebsstellungen ausgebildet ist, wobei das Sperrglied (17) sich in einer der Betriebsstellungen im eingerückten Zustand und in den anderen Betriebsstellungen im ausgerückten Zustand befindet.

4. Bohrfutter nach Anspruch 3, dadurch gekennzeichnet, daß der Schleppring (19) eine sektorförmige Ausnehmung (35) aufweist, deren Enden Anschläge (24) für einen am Stellring (20) ausgebildete Rastnocken (36) der Rasteinrichtung bilden, und die den maximalen Verstellweg zwischen Schleppring (19) und Stellring (20) begrenzen.

5. Bohrfutter nach Anspruch 4, dadurch gekennzeichnet, daß der Rastnocken (36) eine an einer radial federnden Rastlippe (37) ausgebildete Rastnase (38) aufweist, die aus einer an einer Rastschulter (40) des Schlepprings (19) anliegenden Ruhelage mit eingerücktem Sperrglied (17) in einen Rastsitz (39) mit ausgerücktem Sperrglied (17) verstellbar ist.

6. Bohrfutter nach Anspruch 1 oder 2, insbesondere in selbstspannender Ausführungsform dadurch gekennzeichnet, daß zwischen dem Stellring (20) und dem Schleppring (19) eine den Stellring (20) nach dessen Verdrehen in Löserichtung (L) in die Mittenstellung zurückstellende Rastfeder (41) angeordnet ist.

7. Bohrfutter nach Anspruch 6, dadurch gekennzeichnet, daß der Stellring (20) zwei radial nach innen weisende Haken (42, 43) aufweist, die in Ausnehmungen des Schleppringes (19) eingreifen, in denen die Rastfeder (41) bzw die Sperrfeder (29) angeordnet sind, die durch die Haken (42, 43) betätigbar sind, die jeweils die Anschläge (23) für den Schleppring (19) aufweisen.

8. Bohrfutter nach einem der Ansprüche 1 bis 7, dadurch gekennzeichnet, daß das Sperrglied (17) durch eine es in den ausgerückten Zustand verstellende Feder (17) beaufschlagt ist.

9. Bohrfutter nach einem der Ansprüche 1 bis 8, dadurch gekennzeichnet, daß das Sperrglied (17) durch eine Sperrklinke gebildet ist.

10. Bohrfutter nach einem der Ansprüche 1 bis 9, dadurch gekennzeichnet, daß der Kranz (15) von Sperrausnehmungen (16) an der der Bohrspindel zugewandten Seite des Spannrings (10) angeordnet ist.

11. Bohrfutter nach einem der Ansprüche 1 bis 10, dadurch gekennzeichnet, daß zwei der Sperrglieder (17) vorgesehen sind.
